# EUROPEAN PATENT APPLICATION

(11) **EP 4 753 338 A1**
(43) Date of publication of application: **03.06.2026**
(21) Application number: 24855345.5
(22) Date of filing: 10.05.2024
(51) Int. Cl.: H04W 48/20

(54) **COMMUNICATION METHOD AND CORRESPONDING APPARATUS**

(30) Priority: 21.08.2023 CN 202311056533
(71) Applicant: HUAWEI TECHNOLOGIES CO., LTD., Shenzhen 518129 (CN)
(72) Inventor: WANG, Hui, Shenzhen, Guangdong 518129 (CN); ZHANG, Xiaoyu, Shenzhen, Guangdong 518129 (CN); LIAO, Shuri, Shenzhen, Guangdong 518129 (CN); DOU, Shengyue, Shenzhen, Guangdong 518129 (CN); SHI, Meng, Shenzhen, Guangdong 518129 (CN); YANG, Liu, Shenzhen, Guangdong 518129 (CN); YU, Tong, Shenzhen, Guangdong 518129 (CN)
(74) Representative: Maiwald GmbH
(86) International application number: PCT/CN2024/092303
(87) International publication number: WO 2025/039615

(57) **Abstract**

This application discloses a communication method, which may be applied to satellite communication or high-altitude platform communication. The method includes: An access network apparatus determines at least two cells in a coverage area, where the at least two cells include a first cell and a second cell, the first cell and the second cell respectively correspond to different user access requirements or different areas, and the user access requirement is a quantity of access users in a unit time; and the access network apparatus determines, based on the user access requirements or the areas of the first cell and the second cell, configuration parameters of SSB beams that are respectively used for scanning the first cell and the second cell. In this application, different configuration parameters of SSB beams are configured for cells with different user access requirements or different areas. In this way, the parameter of the SSB beam can be configured based on a requirement of the cell, thereby reducing a waste of radio frequency resources of the access network apparatus and improving utilization of the radio frequency resources.

## Description

This application claims priority to Chinese Patent Application No. 202311056533.7, filed with the China National Intellectual Property Administration on August 21, 2023 and entitled "COMMUNICATION METHOD AND CORRESPONDING APPARATUS", which is incorporated herein by reference in its entirety.

### TECHNICAL FIELD

This application relates to the field of communication technologies, and specifically, to a communication method and a corresponding apparatus.

### BACKGROUND

High-altitude mobile communication (for example, satellite communication) has features such as a long communication distance, a large coverage area, and flexible networking, and can provide services for both fixed terminals and mobile terminals.

Because a conventional terrestrial network cannot provide seamless coverage for the terminals, especially in places, such as the sea, the desert, or the air, in which base stations cannot be deployed, a non-terrestrial network (non-terrestrial network, NTN) is introduced into a 5th generation (5th generation, 5G) mobile network system. The non-terrestrial network provides seamless coverage for the terminals by deploying the base stations or a part of base station functions on high-altitude platforms or satellites, and the high-altitude platforms or the satellites are less affected by natural disasters, so that reliability of the 5G system can be improved.

In a high-altitude mobile communication system, a base station scans a coverage area by using a fixedly configured synchronization signal block (synchronization signal block, SSB) beam, and an actual requirement of the coverage area is not considered. This usually wastes radio frequency resources used for SSB beam scanning.

### SUMMARY

This application provides a communication method, to improve utilization of radio frequency resources. This application further provides a corresponding apparatus, a computer-readable storage medium, a computer program product, and the like.

A first aspect of this application provides a communication method. The method includes: An access network apparatus determines at least two cells in a coverage area, where the at least two cells include a first cell and a second cell, the first cell and the second cell respectively correspond to different user access requirements or different areas, and the user access requirement is a quantity of access users in a unit time; and the access network apparatus determines, based on the user access requirements or the areas respectively corresponding to the first cell and the second cell, a first synchronization signal block (synchronization signal block, SSB) beam used for scanning the first cell and a second SSB beam used for scanning the second cell, where a configuration parameter of the first SSB beam is different from a configuration parameter of the second SSB beam, the first SSB beam is a beam used for carrying an SSB corresponding to the first cell, and the second SSB beam is a beam used for carrying an SSB corresponding to the second cell.

In this application, the access network apparatus may be a base station or a chip system in the base station. The base station may be a ground base station, or may be a base station mounted on a satellite or a high-altitude platform. The high-altitude platform may be an uncrewed aerial vehicle, a hot air balloon, or the like.

In this application, the coverage area is an area in which the access network apparatus is capable of performing communication. The coverage area may be divided into two cells or three or more cells. If the coverage area is divided into three or more cells, cells with a same area or a same user access requirement may exist in the cells, but at least two cells have different user access requirements or areas.

In this application, different configuration parameters of SSB beams are configured for cells with different user access requirements or different areas. In this way, the parameter of the SSB beam can be configured based on a requirement of the cell, thereby reducing a waste of radio frequency resources of the access network apparatus and improving utilization of the radio frequency resources.

In a possible implementation, the configuration parameter of the first SSB beam includes a width of the first SSB beam and a scanning periodicity of the first SSB beam, and the configuration parameter of the second SSB beam includes a width of the second SSB beam and a scanning periodicity of the second SSB beam; and a difference between the configuration parameter of the first SSB beam and the configuration parameter of the second SSB beam lies in at least one of the following: The width of the first SSB beam is different from the width of the second SSB beam, and the scanning periodicity of the first SSB beam is different from the scanning periodicity of the second SSB beam.

In this application, a beam width is divided into a horizontal beam width and a vertical beam width. The horizontal beam width is an included angle between two directions in a horizontal plane, where radiated power decreases by 3 dB on both sides of a maximum radiation direction. The vertical beam width is an included angle between two directions in a vertical plane, where radiated power decreases by 3 dB on both sides of a maximum radiation direction. In this application, a width of an SSB beam is a horizontal beam width and/or a vertical beam width. The width of the beam affects a coverage area of the beam. For example, a coverage area of a wide beam is large, and a coverage area of a narrow beam is small.

In this application, a scanning periodicity is time consumed for the SSB beam to complete scanning of a corresponding cell. A length of the scanning periodicity affects access time of a terminal device. A short scanning periodicity leads to fast access of the terminal device, a long scanning periodicity leads to slow access of the terminal device. In this way, the short scanning periodicity may be configured for a cell with a high user access requirement, so that the terminal device quickly accesses the access network apparatus.

In this possible implementation, at least one of the width of the SSB beam and the scanning periodicity of the SSB beam of each of the first cell and the second cell is configured differently, so that different cells can be configured as required based on the corresponding user access requirements or areas, thereby improving utilization of radio frequency resources.

In a possible implementation, when the area of the first cell meets a first condition, the width of the first SSB beam is configured as a first parameter.

In this possible implementation, there may be one or more first conditions, and the first parameter is a positive number. The area of the first cell is compared with the first condition, and then how to configure the width of the first SSB beam is determined. This helps improve accuracy of configuring the width of the first SSB beam.

In a possible implementation, the first condition is: The area of the first cell is greater than a first threshold, or the area of the first cell is less than the first threshold. When the area of the first cell is greater than the first threshold, the first parameter is greater than a first width value, and the first width value is a beam width value corresponding to the first threshold; or when the area of the first cell is less than the first threshold, the first parameter is less than the first width value.

In this possible implementation, the first threshold and the first width value may be a pair of pre-configured parameters. When an area of a cell is equal to the first threshold, a width value of an SSB beam is equal to the first width value, so that good adaptation between the area of the cell and the width value of the SSB beam can be achieved. The first area is compared with the first threshold, to determine to use a value greater than the first width value or a value less than the first width value as the first parameter. In this way, an appropriate width can be configured for the first SSB beam of the first cell, thereby improving accuracy of configuring the width. In other words, a wide beam may be configured for a cell with a large area, and a narrow beam may be configured for a cell with a small area. In this way, for the cell with the large area, the wide beam can improve a coverage range, and reduce a quantity of SSB beams, thereby reducing use of a radio frequency channel that generates the SSB beam and reducing a waste of radio frequency resources. For the cell with the small area, only narrow beam scanning needs to be used to cover a corresponding range. In this way, a signal-to-noise ratio (signal-to-noise ratio, SNR) for data transmission in the cell with the small area can be increased.

In a possible implementation, the first condition is: The area of the first cell is larger than the area of the second cell, or the area of the first cell is smaller than the area of the second cell. When the area of the first cell is larger than the area of the second cell, the first parameter is greater than a width value of the second SSB beam; or when the area of the first cell is smaller than the area of the second cell, the first parameter is less than the width value of the second SSB beam.

In this possible implementation, for the first cell, the width of the first SSB beam may be configured with reference to the second cell. The area of the first cell is compared with that of the second cell, so that an appropriate width of the first SSB beam can be configured for the first cell. In this way, accuracy of configuring the width of the first SSB beam can be improved.

In a possible implementation, when the user access requirement corresponding to the first cell meets a second condition, the scanning periodicity of the first SSB beam is configured as a second parameter.

In this application, the scanning periodicity of the first SSB beam may be usually configured as 5 milliseconds (ms), 10 ms, 20 ms, 40 ms, 80 ms, or 160 ms. It is clear that the scanning periodicity may alternatively be configured as another value. A value of the second parameter is not limited in this application.

In this possible implementation, the second condition is a condition related to the user access requirement. There may be one or more second conditions, and the second parameter is a positive number. The user access requirement of the first cell is compared with the second condition, and then how to configure the scanning periodicity of the first SSB beam is determined. This helps improve accuracy of configuring the scanning periodicity of the first SSB beam.

In a possible implementation, the second condition is: The user access requirement corresponding to the first cell is greater than a second threshold, or the user access requirement corresponding to the first cell is less than the second threshold. When the user access requirement corresponding to the first cell is greater than the second threshold, the second parameter is less than a first time value, and the first time value is a scanning periodicity corresponding to the second threshold; or when the user access requirement corresponding to the first cell is less than the second threshold, the second parameter is greater than the first time value.

In this possible implementation, the first time value may be a parameter configured together with the second threshold. When a user access requirement of a cell is equal to the second threshold, a scanning periodicity of an SSB beam is equal to the first time value, so that good adaptation between the user access requirement and the scanning periodicity of the SSB beam can be achieved. The user access requirement corresponding to the first cell is compared with the second threshold, so that an appropriate scanning periodicity can be configured for the first SSB beam of the first cell, thereby improving accuracy of configuring the first SSB beam.

In a possible implementation, the second condition is: The user access requirement corresponding to the first cell is higher than the user access requirement of the second cell, or the user access requirement corresponding to the first cell is lower than the user access requirement of the second cell. When the user access requirement corresponding to the first cell is higher than the user access requirement of the second cell, the second parameter is less than the scanning periodicity of the second SSB beam; or when the user access requirement corresponding to the first cell is lower than the user access requirement of the second cell, the second parameter is greater than the scanning periodicity of the second SSB beam.

In this possible implementation, for the first cell, the scanning periodicity of the first SSB beam may be configured with reference to the second cell. The user access requirement of the first cell is compared with that of the second cell, so that an appropriate scanning periodicity of the first SSB beam can be configured for the first cell. In this way, accuracy of configuring the scanning periodicity of the first SSB beam can be improved.

In a possible implementation, when the user access requirement corresponding to the first cell is greater than the second threshold, the width of the first SSB beam is greater than a second width value, and the second width value is a beam width value corresponding to the second threshold; or when the user access requirement corresponding to the first cell is less than the second threshold, the width of the first SSB beam is less than the second width value.

In this possible implementation, the second threshold, the first time value, and the second width value may be a group of pre-configured parameters. When a user access requirement of a cell is equal to the second threshold, a scanning periodicity of an SSB beam is the first time value, and a width value of the SSB beam is equal to the second width value, so that good adaptation between the user access requirement, the scanning periodicity, and the width value of the SSB beam can be achieved. The user access requirement of the first cell is compared with the second threshold, to determine to use a value greater than the second width value or a value less than the second width value as the width of the first SSB beam. In this way, an appropriate width can be configured for the first SSB beam of the first cell, thereby improving accuracy of configuring the width. In other words, a wide beam may be configured for a high user access requirement and a short scanning periodicity, and a narrow beam may be configured for a low user access requirement and a long scanning periodicity. In this way, for a cell with the high user access requirement, the wide beam can improve a coverage range, and quick scanning of the cell can be implemented by using the wide beam, so that a terminal device can quickly access the access network apparatus. For a cell with the low user access requirement, a small quantity of terminal devices need to access the access network apparatus, and only narrow beam scanning needs to be used to basically meet an access requirement of this part of terminal devices. In addition, an SNR for data transmission in the cell with the low user access requirement can also be increased by using the narrow beam.

In a possible implementation, when the user access requirement corresponding to the first cell is higher than the user access requirement of the second cell, the width of the first SSB beam is greater than a width value of the second SSB beam; or when the user access requirement corresponding to the first cell is lower than the user access requirement of the second cell, the width of the first SSB beam is less than the width value of the second SSB beam.

In this possible implementation, for the first cell, the width of the first SSB beam may be configured with reference to the second cell. The user access requirement of the first cell is compared with that of the second cell, so that an appropriate width of the first SSB beam can be configured for the first cell. In this way, accuracy of configuring the width of the first SSB beam can be improved.

In a possible implementation, when the user access requirement corresponding to the first cell is greater than the second threshold, a quantity of radio frequency channels corresponding to the first cell is greater than a first value, the first value is a quantity of radio frequency channels corresponding to the second threshold, and the radio frequency channel of the first cell is used for generating the first SSB beam.

In this possible implementation, the radio frequency channel may be understood as an antenna or an antenna array, and the radio frequency channel is used for generating the SSB beam. The first value may be a quantity of radio frequency channels configured and corresponding to the second threshold. When the user access requirement corresponding to the first cell is greater than the second threshold, a large quantity of radio frequency channels may be used for generating first SSB beams. In this way, a beam coverage range of the first cell with the high user access requirement can be improved, thereby improving access efficiency of a terminal device.

In a possible implementation, when the user access requirement corresponding to the first cell is higher than the user access requirement of the second cell, a quantity of radio frequency channels corresponding to the first cell is greater than a quantity of radio frequency channels of the second cell, the radio frequency channel of the first cell is used for generating the first SSB beam, and the radio frequency channel of the second cell is used for generating the second SSB beam.

In this possible implementation, for the first cell, the quantity of radio frequency channels corresponding to the first cell may be configured with reference to the second cell. The user access requirement of the first cell is compared with that of the second cell, so that an appropriate quantity of radio frequency channels can be configured for the first cell. In this way, accuracy of configuring the quantity of radio frequency channels of the first cell can be improved.

In a possible implementation, that the access network apparatus determines the at least two cells in the coverage area includes: The access network apparatus determines the at least two cells in the coverage area based on stored historical access quantities at different positions in the coverage area.

In this possible implementation, the cells in the coverage area may be obtained through division based on the historical access quantities that are at the different positions in the coverage area and that are stored by the access network apparatus. In this way, accuracy of subsequently configuring a parameter of an SSB beam in each cell can be improved.

In a possible implementation, the method further includes: receiving historical access quantities at different positions in the coverage area from a control center apparatus; and that the access network apparatus determines the at least two cells in the coverage area includes: The access network apparatus determines the at least two cells in the coverage area based on the historical access quantities at the different positions in the coverage area.

In this possible implementation, the cells in the coverage area may be obtained through division based on the historical access quantities that are at the different positions in the coverage area and that are notified by the control center apparatus. In this way, accuracy of subsequently configuring a parameter of an SSB beam in each cell can be improved.

A second aspect of this application provides a communication apparatus. The communication apparatus includes a transceiver module and a processing module.

The processing module is configured to determine at least two cells in a coverage area, where the at least two cells include a first cell and a second cell, the first cell and the second cell respectively correspond to different user access requirements or different areas, and the user access requirement is a quantity of access users in a unit time.

The processing module is further configured to determine, based on the user access requirements or the areas respectively corresponding to the first cell and the second cell, a first synchronization signal block SSB beam used for scanning the first cell and a second SSB beam used for scanning the second cell, where a configuration parameter of the first SSB beam is different from a configuration parameter of the second SSB beam, the first SSB beam is a beam used for carrying an SSB corresponding to the first cell, and the second SSB beam is a beam used for carrying an SSB corresponding to the second cell.

In a possible implementation, the configuration parameter of the first SSB beam includes a width of the first SSB beam and a scanning periodicity of the first SSB beam, and the configuration parameter of the second SSB beam includes a width of the second SSB beam and a scanning periodicity of the second SSB beam; and a difference between the configuration parameter of the first SSB beam and the configuration parameter of the second SSB beam lies in at least one of the following: The width of the first SSB beam is different from the width of the second SSB beam, and the scanning periodicity of the first SSB beam is different from the scanning periodicity of the second SSB beam.

In a possible implementation, when the area of the first cell meets a first condition, the width of the first SSB beam is configured as a first parameter.

In a possible implementation, the first condition is: The area of the first cell is greater than a first threshold, or the area of the first cell is less than the first threshold. When the area of the first cell is greater than the first threshold, the first parameter is greater than a first width value, and the first width value is a beam width value corresponding to the first threshold; or when the area of the first cell is less than the first threshold, the first parameter is less than the first width value.

In a possible implementation, the first condition is: The area of the first cell is larger than the area of the second cell, or the area of the first cell is smaller than the area of the second cell. When the area of the first cell is larger than the area of the second cell, the first parameter is greater than a width value of the second SSB beam; or when the area of the first cell is smaller than the area of the second cell, the first parameter is less than the width value of the second SSB beam.

In a possible implementation, when the user access requirement corresponding to the first cell meets a second condition, the scanning periodicity of the first SSB beam is configured as a second parameter.

In a possible implementation, the second condition is: The user access requirement corresponding to the first cell is greater than a second threshold, or the user access requirement corresponding to the first cell is less than the second threshold. When the user access requirement corresponding to the first cell is greater than the second threshold, the second parameter is less than a first time value, and the first time value is a scanning periodicity corresponding to the second threshold; or when the user access requirement corresponding to the first cell is less than the second threshold, the second parameter is greater than the first time value.

In a possible implementation, the second condition is: The user access requirement corresponding to the first cell is higher than the user access requirement of the second cell, or the user access requirement corresponding to the first cell is lower than the user access requirement of the second cell. When the user access requirement corresponding to the first cell is higher than the user access requirement of the second cell, the second parameter is less than the scanning periodicity of the second SSB beam; or when the user access requirement corresponding to the first cell is lower than the user access requirement of the second cell, the second parameter is greater than the scanning periodicity of the second SSB beam.

In a possible implementation, when the user access requirement corresponding to the first cell is greater than the second threshold, the width of the first SSB beam is greater than a second width value, and the second width value is a beam width value corresponding to the second threshold; or when the user access requirement corresponding to the first cell is less than the second threshold, the width of the first SSB beam is less than the second width value.

In a possible implementation, when the user access requirement corresponding to the first cell is higher than the user access requirement of the second cell, the width of the first SSB beam is greater than a width value of the second SSB beam; or when the user access requirement corresponding to the first cell is lower than the user access requirement of the second cell, the width of the first SSB beam is less than the width value of the second SSB beam.

In a possible implementation, when the user access requirement corresponding to the first cell is greater than the second threshold, a quantity of radio frequency channels corresponding to the first cell is greater than a first value, the first value is a quantity of radio frequency channels corresponding to the second threshold, and the radio frequency channel of the first cell is used for generating the first SSB beam.

In a possible implementation, when the user access requirement corresponding to the first cell is higher than the user access requirement of the second cell, a quantity of radio frequency channels corresponding to the first cell is greater than a quantity of radio frequency channels of the second cell, the radio frequency channel of the first cell is used for generating the first SSB beam, and the radio frequency channel of the second cell is used for generating the second SSB beam.

In a possible implementation, the processing module is specifically configured to determine the at least two cells in the coverage area based on stored historical access quantities at different positions in the coverage area.

In a possible implementation, the transceiver module is configured to receive historical access quantities at different positions in the coverage area from a control center apparatus; and
the processing module is specifically configured to determine the at least two cells in the coverage area based on the historical access quantities at the different positions in the coverage area.

A third aspect of this application provides a communication apparatus. The communication apparatus includes a processor, a storage, and a transceiver. The storage stores a computer program or computer instructions. The processor is configured to invoke and run the computer program or the computer instructions stored in the storage, to cause the processor to implement a processing operation in any one of the first aspect and the implementations of the first aspect. The transceiver is configured to receive and send a signal, for example, implement receiving and sending operations in any one of the first aspect and the implementations of the first aspect.

A fourth aspect of this application provides a communication apparatus. The communication apparatus includes a processor, and the processor is configured to perform any one of the first aspect and the implementations of the first aspect.

A fifth aspect of this application provides a computer-readable storage medium, including computer instructions. When the instructions are run on a computer, the computer is caused to perform any one of the first aspect and the implementations of first aspect.

A sixth aspect of this application provides a computer program product including instructions. When the computer program product runs on a computer, the computer is caused to perform any one of the first aspect and the implementations of first aspect.

A seventh aspect of this application provides a chip apparatus, including a processor that is configured to invoke a computer program or computer instructions in a storage, to cause the processor to perform any one of the first aspect and the implementations of first aspect.

Optionally, the processor is coupled to the storage through an interface.

An eighth aspect of this application provides a communication system, including an access network apparatus and a terminal device, where the access network apparatus communicates with the terminal device, and the access network apparatus is configured to perform the method in any one of the first aspect and the implementations of first aspect.

For technical effects of any one of the second aspect to the eighth aspect and the possible implementations of the second aspect to the eighth aspect of this application, refer to technical effects of any one of the first aspect and the implementations of the first aspect for understanding.

### BRIEF DESCRIPTION OF DRAWINGS

FIG. 1A is a diagram of an architecture of a communication system according to an embodiment of this application;
FIG. 1B is a diagram of an architecture of a satellite communication system according to an embodiment of this application;
FIG. 1C is a diagram of an example of a satellite coverage range according to an embodiment of this application;
FIG. 2 is a diagram of an embodiment of a communication method according to an embodiment of this application;
FIG. 3 is a diagram of an example of a communication scenario according to an embodiment of this application;
FIG. 4A is a diagram of an example of a relationship between a width of a beam and a radio frequency channel according to an embodiment of this application;
FIG. 4B is a diagram of another example of a relationship between a width of a beam and a radio frequency channel according to an embodiment of this application;
FIG. 5 is a diagram of another embodiment of a communication method according to an embodiment of this application;
FIG. 6 is a diagram of another embodiment of a communication method according to an embodiment of this application;
FIG. 7 is a diagram of an example of a relationship between a width of a beam and a user access requirement according to an embodiment of this application;
FIG. 8 is a diagram of an example of a relationship between a scanning periodicity of a beam and a radio frequency channel according to an embodiment of this application;
FIG. 9 is a diagram of a structure of a communication apparatus according to an embodiment of this application;
FIG. 10 is a diagram of another structure of a communication apparatus according to an embodiment of this application; and
FIG. 11 is a diagram of another structure of a communication apparatus according to an embodiment of this application.

### DESCRIPTION OF EMBODIMENTS

The following describes embodiments of this application with reference to the accompanying drawings. It is clear that the described embodiments are merely a part rather than all of embodiments of this application. A person of ordinary skill in the art may learn that with development of technologies and emergence of new scenarios, technical solutions provided in embodiments of this application are also applicable to similar technical problems.

In the specification, the claims, and the accompanying drawings of this application, terms such as "first" and "second" are used for distinguishing between similar objects, but do not necessarily indicate a specific order or sequence. It should be understood that data used in such a way is interchangeable in appropriate circumstances, so that embodiments described herein can be implemented in an order other than the order illustrated or described herein. In addition, terms such as "include" and "have" and any variants thereof are intended to cover a non-exclusive inclusion. For example, a process, a method, a system, a product, or a device that includes a series of steps or units is not necessarily limited to those expressly listed steps or units, but may include other steps or units not expressly listed or inherent to the process, method, product, or device.

Embodiments of this application provide a communication method, to improve utilization of radio frequency resources. This application further provides a corresponding apparatus, a computer-readable storage medium, a computer program product, and the like. Details are separately described in the following.

The technical solutions in embodiments of this application may be applied to various communication systems, such as a satellite communication system, a 5th generation (5th generation, 5G) system or a new radio (new radio, NR) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a mobile communication system after a 5G network (for example, a 6G mobile communication system), and a vehicle-to-everything (vehicle-to-everything, V2X) communication system.

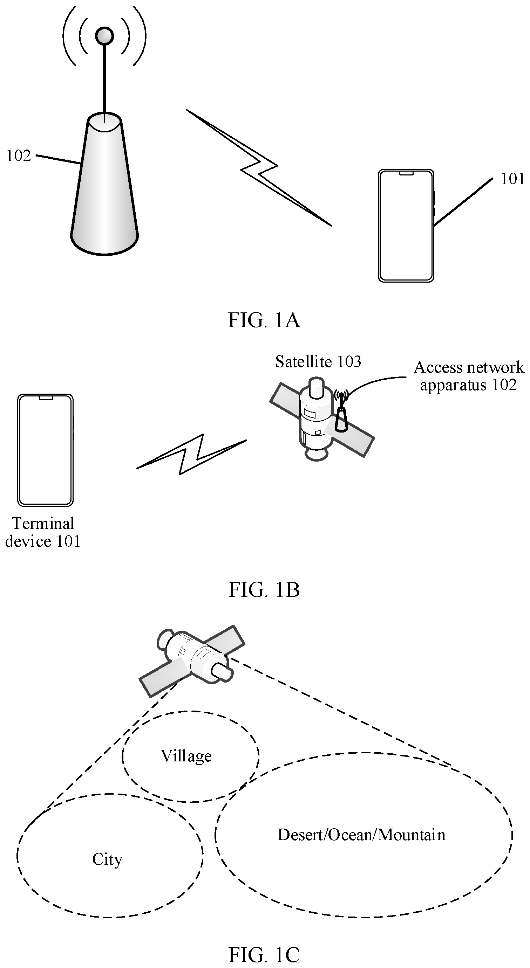

FIG. 1A is a diagram of a structure of a communication system according to an embodiment of this application.

As shown in FIG. 1A, the communication system to which this application is applicable includes a terminal device 101 that may access an access network apparatus 102. One access network apparatus 102 may communicate with a plurality of terminal devices 101, and one terminal device may also communicate with different access network apparatuses 102. FIG. 1A shows only one terminal device 101 and one access network apparatus 102. It should be noted that a quantity of terminal devices and a quantity of access network apparatuses are not limited in this application.

In this embodiment of this application, the terminal device 101 includes a device that provides voice and/or data connectivity for users, for example, may include a handheld device having a wireless connection function or a processing device connected to a wireless modem. The terminal device 101 may communicate with a core network via a radio access network (radio access network, RAN), and exchange a voice and/or data with the RAN. The terminal device 101 may include user equipment (user equipment, UE), a wireless terminal device, a mobile terminal device, a subscriber unit (subscriber unit), a subscriber station (subscriber station), a mobile station (mobile station), a mobile (mobile) console, a remote station (remote station), an access point (access point, AP), a remote terminal (remote terminal) device, an access terminal (access terminal) device, a user terminal (user terminal) device, a user agent (user agent), a user device (user device), or the like. For example, the terminal device 101 may be a device, for example, a personal communication service (personal communication service, PCS) phone, a cordless phone, a session initiation protocol (session initiation protocol, SIP) phone, a wireless local loop (wireless local loop, WLL) station, or a personal digital assistant (personal digital assistant, PDA). Currently, some examples of the terminal device are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in vehicle-to-everything, a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. For example, the wireless terminal in vehicle-to-everything may be a vehicle-mounted device, an entire vehicle device, a vehicle-mounted module, a vehicle, or the like. The wireless terminal in industrial control may be a camera, a robot, or the like. The wireless terminal in the smart home may be a television, an air conditioner, a sweeper, a speaker, a set-top box, or the like.

In a vehicle-to-everything scenario, the terminal device 101 may be a vehicle-to-everything terminal device, which is also referred to as a V2X terminal device. Specifically, in a V2V communication process, the terminal device 101 may be a vehicle-mounted terminal. In a V2I communication process, the terminal device 101 may be a vehicle-mounted terminal or an infrastructure having a mobile communication function. In another V2X scenario, the terminal device 101 may alternatively be another V2X device. This is not specifically limited herein. The terminal device 101 may alternatively be a wearable device, for example, glasses, gloves, a watch, clothing, and shoes, or another portable device that may be directly worn on a body or integrated into clothes or accessories of a user.

In an internet-of-things scenario, the terminal device 101 may be a limited device, for example, a low-power-consumption terminal device, a terminal device having a limited storage capability, or a terminal device having a limited computing capability. This is not specifically limited herein.

It should be understood that the terminal device 101 in embodiments of this application may be a device in any one of the foregoing scenarios or a chip in the device. This is not specifically limited herein. Regardless of whether the terminal device 101 is used as the device or the chip, the terminal device 101 can be manufactured, sold, or used as an independent product.

In addition, the access network apparatus 102 communicating with the terminal device 101 may be a device in a wireless network or a chip system. For example, the access network apparatus is a device that is deployed in a radio access network and that provides a wireless communication function for the terminal device. For example, the access network apparatus may be a radio access network (radio access network, RAN) node that connects the terminal device to the wireless network.

The access network apparatus includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like, or may be an access network apparatus in a 5G mobile communication system, for example, a next generation NodeB (next generation NodeB, gNB), a transmission reception point (transmission reception point, TRP), or a transmission point (transmission point, TP) in a new radio (new radio, NR) system, or one antenna panel or a group of (including a plurality of antenna panels) antenna panels of a base station in the 5G mobile communication system. Alternatively, the access network apparatus may be a network node forming a gNB or a transmission point, for example, a baseband unit (baseband unit, BBU) or a distributed unit (distributed unit, DU).

In some deployments, in an open access network (Open RAN) architecture, the gNB may include a central unit (central unit, CU) and a DU. The gNB may further include an active antenna unit (active antenna unit, AAU). The CU implements a part of functions of the gNB, and the DU implements a part of functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a medium access control (medium access control, MAC) layer, and a physical (physical, PHY) layer. The AAU implements a part of physical layer processing functions, radio frequency processing, and functions related to an active antenna. Information at the RRC layer is finally changed to information at the PHY layer, or is changed from the information at the PHY layer. Therefore, in this architecture, higher layer signaling (for example, RRC layer signaling) may also be considered to be sent by the DU, or sent by the DU and the AAU. It may be understood that a network device may be a device including one or more of a CU node, a DU node, and an AAU node. In addition, the CU may be divided into a network device in an access network (radio access network, RAN), or the CU may be divided into a network device in a core network (core network, CN). This is not limited in this application.

It should be understood that the access network apparatus 102 in embodiments of this application may be any one of the foregoing devices or a chip in the device. This is not specifically limited herein. Regardless of whether the access network apparatus 102 is used as the device or the chip, the access network apparatus 102 can be manufactured, sold, or used as an independent product.

In embodiments of this application, the access network apparatus may be a ground access network apparatus, or may be an access network apparatus mounted on a satellite or a high-altitude platform. The high-altitude platform may be an uncrewed aerial vehicle, a hot air balloon, or the like.

As shown in FIG. 1B, the access network apparatus 102 is mounted on a satellite 103, and performs long-distance satellite communication with the terminal device 101.

A satellite communication scenario is used as an example. As shown in FIG. 1C, a coverage area of the satellite is large, and the coverage area may include a city, a village, a desert/an ocean/a mountain, and the like. Cellular network coverage in the city is good, and a terminal device of a user in the city usually preferentially accesses a cellular network in the city, and has a low requirement for access to a satellite base station. When there is cellular network coverage, a terminal device of a user in the village also preferentially accesses the cellular network, and accesses the satellite base station only when no cellular network coverage exists. Compared with the city, the village has a higher requirement for access to the satellite base station. Desert, ocean, and mountain areas basically have no cellular network coverage. These areas have high requirements for access to the satellite base station.

The satellite communication scenario in embodiments of this application may be a transparent forwarding scenario or a regeneration mode scenario of satellite communication. It is clear that the scenario may alternatively be another satellite communication scenario.

Both the access network apparatus on the satellite and the ground access network apparatus scan, in a process in which the terminal device accesses the access network apparatuses, the terminal device by using synchronization signal block (synchronization signal block, SSB) beams, to complete an access process of the terminal device.

For ease of understanding of embodiments of this application, the following first briefly describes terms in this application.
1. Beam (beam): The beam is a communication resource. The beam may be a wide beam, a narrow beam, or another type of beam, and a technology for forming the beam may be a beamforming technology or another technical means. The beamforming technology may be specifically a digital beamforming technology, an analog beamforming technology, and a hybrid digital/analog beamforming technology. Different beams may be considered as different resources.

In an NR protocol, the beam may be referred to as a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi-co-location (quasi-co-location, QCL) information, a QCL assumption, a QCL indication, or the like. The beam may be indicated by a transmission configuration indicator state (transmission configuration indicator state, TCI-state) TCI-state parameter or indicated by a spatial relation (spatial relation) parameter. Therefore, in this application, the beam may be replaced with the spatial domain filter, the spatial filter, the spatial domain parameter, the spatial parameter, the spatial domain setting, the spatial setting, the QCL information, the QCL assumption, the QCL indication, a TCI-state (including an uplink TCI-state or a downlink TCI-state), a spatial relation, or the like. The foregoing terms are also equivalent to each other. Alternatively, the beam may be replaced with another term representing the beam. This is not limited in this application.

A beam used for sending a signal may be referred to as a transmission beam (transmission beam, Tx beam), a spatial domain transmission filter (spatial domain transmission filter), a spatial transmission filter (spatial transmission filter), a spatial domain transmission parameter (spatial domain transmission parameter), a spatial transmission parameter (spatial transmission parameter), a spatial domain transmission setting (spatial domain transmission setting), or a spatial transmission setting (spatial transmission setting). A downlink transmission beam may be indicated by the TCI-state.

A beam used for receiving a signal may be referred to as a reception beam (reception beam, Rx beam), a spatial domain reception filter (spatial domain reception filter), a spatial reception filter (spatial reception filter), a spatial domain reception parameter (spatial domain reception parameter), a spatial reception parameter (spatial reception parameter), a spatial domain reception setting (spatial domain reception setting), or a spatial reception setting (spatial reception setting). An uplink transmission beam may be indicated by any one of the spatial relation, the uplink TCI-state, or a channel sounding reference signal (sounding reference signal, SRS) resource (which indicates that a transmission beam of the SRS is used). Therefore, the uplink beam may alternatively be replaced with an SRS resource.

The transmission beam may refer to distribution of signal strength formed in different directions in space after a signal is transmitted via an antenna, and the reception beam may refer to distribution of signal strength, in different directions in space, of a radio signal received from the antenna.

2. An SSB beam is a beam used for carrying a synchronization signal block (synchronization signal block, SSB).

3. A width of an SSB beam may include a horizontal beam width and a vertical beam width. The horizontal beam width is an included angle between two directions in a horizontal plane, where radiated power decreases by 3 dB on both sides of a maximum radiation direction. The vertical beam width is an included angle between two directions in a vertical plane, where radiated power decreases by 3 dB on both sides of a maximum radiation direction. In this application, the width of the SSB beam is a horizontal beam width and/or a vertical beam width.

4. A scanning periodicity of an SSB beam is time consumed for the SSB beam to complete scanning of a corresponding cell.

5. A coverage area is an area in which an access network apparatus is capable of performing communication, that is, a covered area in which the access network apparatus is capable of performing communication in all directions.

6. Cells refer to different areas in a coverage area, and the different areas have different physical cell identifiers (physical cell identifiers, PCIs). For example, in FIG. 1C, a city area may be a cell, a village area may be a cell, and a desert area/an ocean area/a mountain area may be a cell.

7. A radio frequency channel is a channel used for generating a beam, and may be an antenna or an antenna array. For example, a column of antenna elements is a radio frequency channel. When the beam is used for carrying an SSB, the radio frequency channel is used for generating an SSB beam.

The foregoing describes the communication system provided in embodiments of this application. With reference to the accompanying drawings, the following describes a communication method provided in embodiments of this application.

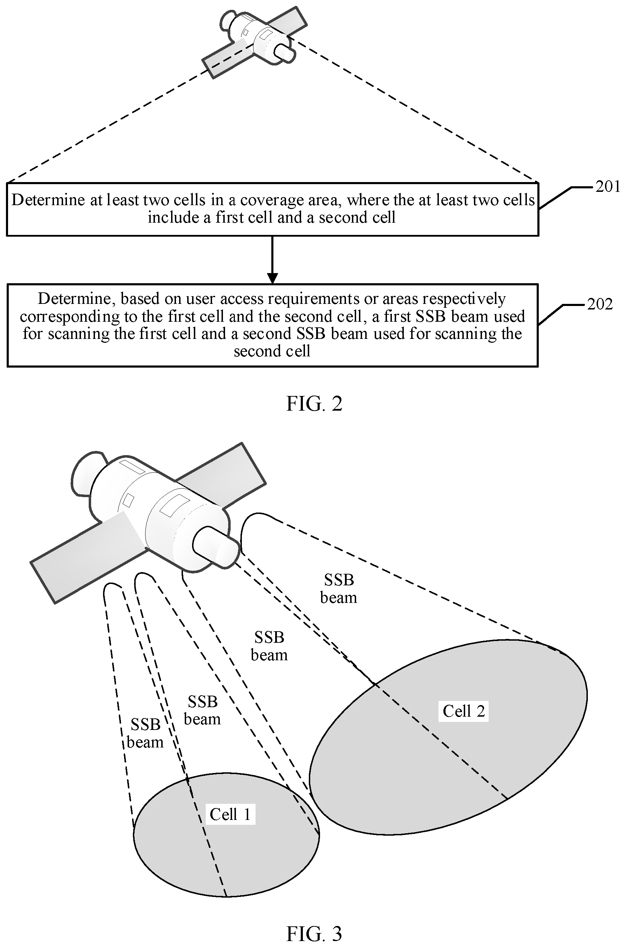

As shown in FIG. 2, an embodiment of the communication method provided in embodiments of this application includes the following steps.

201: An access network apparatus determines at least two cells in a coverage area, where the at least two cells include a first cell and a second cell.

The first cell and the second cell respectively correspond to different user access requirements or different areas, and the user access requirement is a quantity of access users in a unit time.

Optionally, the access network apparatus may determine the at least two cells in the coverage area based on the user access requirement. A specific process may be as follows: The access network apparatus determines the at least two cells in the coverage area based on stored historical access quantities at different positions in the coverage area.

Alternatively, the access network apparatus receives historical access quantities at different positions in the coverage area from a control center apparatus; and then the access network apparatus determines the at least two cells in the coverage area based on the historical access quantities at the different positions in the coverage area.

In this embodiment of this application, the cells in the coverage area are obtained through division based on the historical access quantities at the different positions in the coverage area of the access network apparatus, so that accuracy of subsequently configuring a parameter of an SSB beam in each cell can be improved.

202: The access network apparatus determines, based on the user access requirements or the areas respectively corresponding to the first cell and the second cell, a first SSB beam used for scanning the first cell and a second SSB beam used for scanning the second cell.

A configuration parameter of the first SSB beam is different from a configuration parameter of the second SSB beam, the first SSB beam is a beam used for carrying an SSB corresponding to the first cell, and the second SSB beam is a beam used for carrying an SSB corresponding to the second cell.

According to the solution provided in this embodiment of this application, different configuration parameters of SSB beams are configured for cells with different user access requirements or different areas. In this way, the parameter of the SSB beam can be configured based on a requirement of the cell, thereby reducing a waste of radio frequency resources of the access network apparatus and improving utilization of the radio frequency resources.

In the foregoing embodiment, the configuration parameter of the first SSB beam includes a width of the first SSB beam and a scanning periodicity of the first SSB beam, and the configuration parameter of the second SSB beam includes a width of the second SSB beam and a scanning periodicity of the second SSB beam; and a difference between the configuration parameter of the first SSB beam and the configuration parameter of the second SSB beam lies in at least one of the following: The width of the first SSB beam is different from the width of the second SSB beam, and the scanning periodicity of the first SSB beam is different from the scanning periodicity of the second SSB beam.

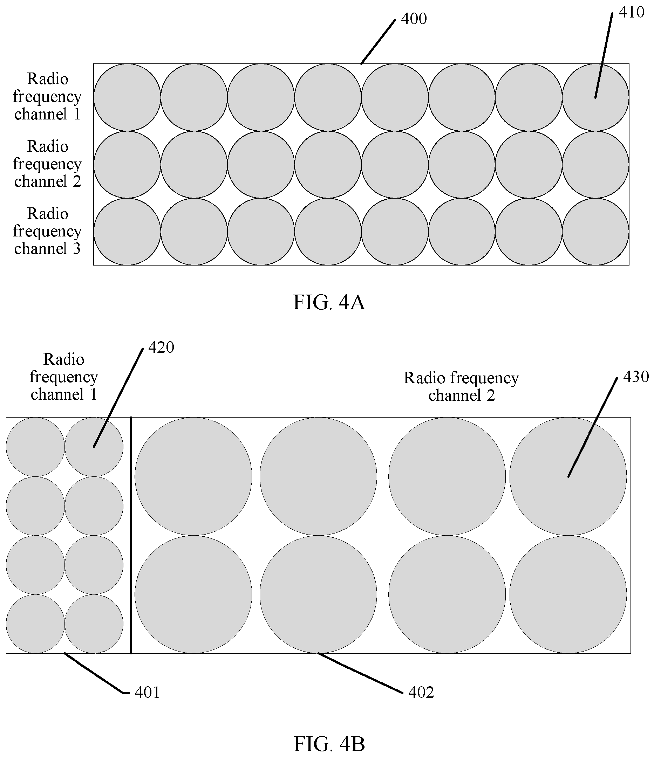

In this embodiment of this application, a width of a beam affects a coverage area of the beam for a cell. For example, a coverage area of a wide beam is large, and a coverage area of a narrow beam is small. As shown in FIG. 3, an area of a cell 1 is smaller than an area of a cell 2, and two narrow SSB beams can cover the cell 1, but cannot cover the cell 2. Therefore, a wide SSB beam may be configured for the cell 2. In this way, the cell 2 can be covered by using two wide SSB beams. In this way, the wide SSB beam is configured for the cell with the large area, so that a quantity of radio frequency channels used for generating SSB beams can be reduced. For this process, refer to a comparison between FIG. 4A and FIG. 4B for understanding.

As shown in FIG. 4A, for an area 400, if an SSB beam whose width is 410 is used for scanning, three radio frequency channels (a radio frequency channel 1, a radio frequency channel 2, and a radio frequency channel 3) need to be used, and each radio frequency channel separately generates, at different moments based on an SSB pattern, eight SSB beams whose widths are 410, so that scanning of the area 400 can be completed. In this embodiment of this application, after the area 400 in FIG. 4A is divided into a cell 401 and a cell 402, for the cell 401, the cell 401 may be scanned by using an SSB beam whose width is 420, and only the radio frequency channel 1 is required to separately generate, at different moments based on the SSB pattern, eight SSB beams whose widths are 420, so that scanning of the cell 401 can be completed. For the cell 402, the cell 402 may be scanned by using an SSB beam whose width is 430, and only the radio frequency channel 2 is required to separately generate, at different moments based on the SSB pattern, eight SSB beams whose width is 430, so that scanning of the cell 402 can be completed. It can be learned from the comparison between FIG. 4A and FIG. 4B that, for the area 400, configuring a width of an SSB beam in a manner shown in FIG. 4B can reduce occupation of one radio frequency channel compared with that in FIG. 4A, thereby improving utilization of the radio frequency channel.

In this embodiment of this application, a scanning periodicity of an SSB beam is time consumed for the SSB beam to complete scanning of a corresponding cell. Time for each radio frequency channel to generate the SSB beam is specific. For example, if a large quantity of radio frequency channels simultaneously generate SSB beams used for cell scanning, scanning of a corresponding cell may be completed in short time. If a small quantity of radio frequency channels simultaneously generate SSB beams for cell scanning, long time is required to complete scanning of a corresponding cell. Therefore, a quantity of used radio frequency channels may be controlled by configuring the scanning periodicity.

In this application, at least one of the width of the SSB beam and the scanning periodicity of the SSB beam of each of the first cell and the second cell is configured differently, so that different cells can be configured as required based on the corresponding user access requirements or areas, thereby improving utilization of radio frequency resources.

In this embodiment of this application, the area covered by the access network apparatus may be divided into a plurality of cells. The first SSB beam corresponding to the first cell is used as an example to describe a configuration concept of the width of the first SSB beam and the scanning periodicity of the first SSB beam.

How to configure the width of the first SSB beam and the scanning periodicity of the first SSB beam may be implemented in the following several manners. The following separately provides descriptions.

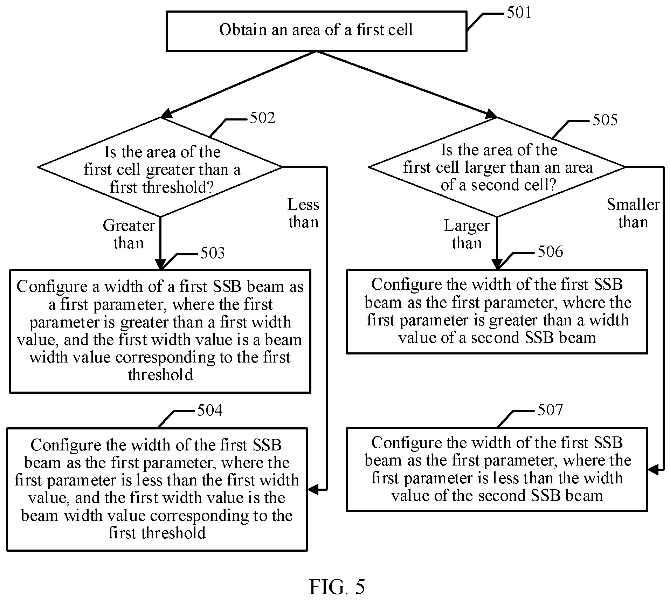

With regard to configuration of the width of the first SSB beam, when the area of the first cell meets a first condition, the width of the first SSB beam is configured as a first parameter. For this process, refer to FIG. 5 for understanding.

As shown in FIG. 5, the configuration process includes the following steps.

501: The access network apparatus obtains the area of the first cell.

502: The access network apparatus compares the area of the first cell with a first threshold; and when the area of the first cell is greater than the first threshold, perform step 503; or when the area of the first cell is less than the first threshold, perform step 504.

503: When the area of the first cell is greater than the first threshold, the access network apparatus configures the width of the first SSB beam as the first parameter, where the first parameter is greater than a first width value, and the first width value is a beam width value corresponding to the first threshold.

In this case, the first condition is: The area of the first cell is greater than the first threshold.

The first threshold and the first width value may be a pair of pre-configured parameters. When an area of a cell is equal to the first threshold, a width value of an SSB beam is equal to the first width value, so that good adaptation between the area of the cell and the width value of the SSB beam can be achieved.

504: When the area of the first cell is less than the first threshold, the access network apparatus configures the width of the first SSB beam as the first parameter, where the first parameter is less than the first width value.

In this case, the first condition is: The area of the first cell is less than the first threshold.

In this embodiment of this application, the first area is compared with the first threshold, to determine to use a value greater than the first width value or a value less than the first width value as the first parameter. In this way, an appropriate width can be configured for the first SSB beam of the first cell, thereby improving accuracy of configuring the width. In other words, a wide beam may be configured for a cell with a large area, and a narrow beam may be configured for a cell with a small area. In this way, for the cell with the large area, the wide beam can improve a coverage range, and reduce a quantity of SSB beams, thereby reducing use of a radio frequency channel that generates the SSB beam and reducing a waste of radio frequency resources. For the cell with the small area, only narrow beam scanning needs to be used to cover a corresponding range. In this way, a signal-to-noise ratio (signal-to-noise ratio, SNR) for data transmission in the cell with the small area can be increased.

505: The access network apparatus compares the area of the first cell with the area of the second cell; and when the area of the first cell is larger than the area of the second cell, perform step 506; or when the area of the first cell is smaller than the area of the second cell, perform step 507.

506: When the area of the first cell is larger than the area of the second cell, the access network apparatus configures the width of the first SSB beam as the first parameter, where the first parameter is greater than a width value of the second SSB beam.

In this case, the first condition is: The area of the first cell is larger than the area of the second cell.

507: When the area of the first cell is smaller than the area of the second cell, the access network apparatus configures the width of the first SSB beam as the first parameter, where the first parameter is less than the width value of the second SSB beam.

In this case, the first condition is: The area of the first cell is smaller than the area of the second cell.

In this embodiment of this application, for the first cell, the width of the first SSB beam may be configured with reference to the second cell. The area of the first cell is compared with that of the second cell, so that an appropriate width of the first SSB beam can be configured for the first cell. In this way, accuracy of configuring the width of the first SSB beam can be improved.

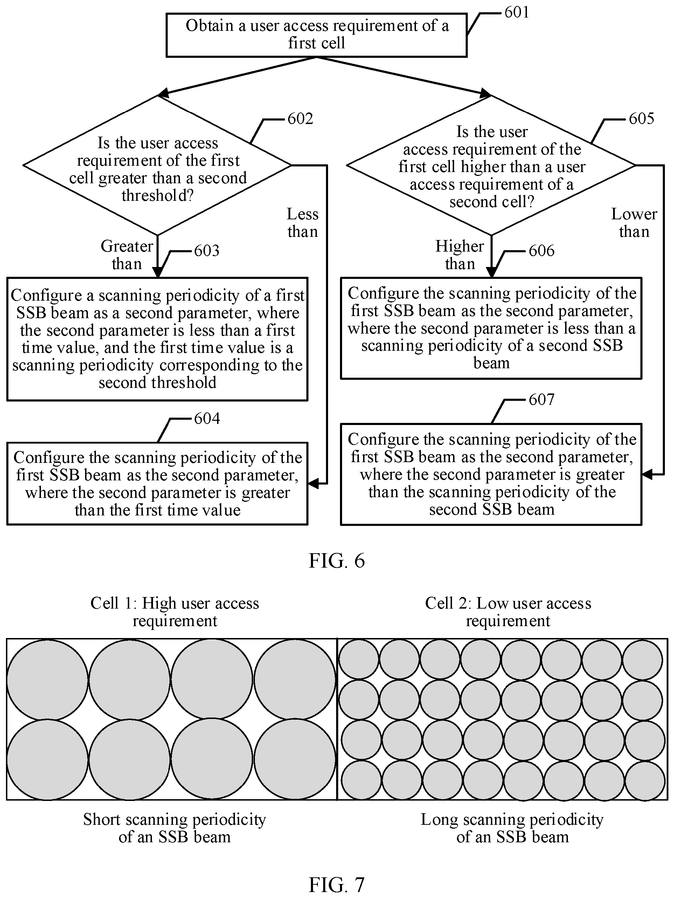

With regard to configuration of the width of the first SSB beam, when the user access requirement corresponding to the first cell meets a second condition, the scanning periodicity of the first SSB beam is configured as a second parameter. For this process, refer to FIG. 6 for understanding.

As shown in FIG. 6, the configuration process includes the following steps.

601: The access network apparatus obtains the user access requirement of the first cell.

602: The access network apparatus compares the user access requirement of the first cell with a second threshold; and if the user access requirement of the first cell is greater than the second threshold, perform step 603; or if the user access requirement of the first cell is less than the second threshold, perform step 604.

603: When the user access requirement of the first cell is greater than the second threshold, the access network apparatus configures the scanning periodicity of the first SSB beam as the second parameter, where the second parameter is less than a first time value, and the first time value is a scanning periodicity corresponding to the second threshold.

In this application, the scanning periodicity of the first SSB beam may be usually configured as 5 milliseconds (ms), 10 ms, 20 ms, 40 ms, 80 ms, or 160 ms. It is clear that the scanning periodicity may alternatively be configured as another value. A value of the second parameter is not limited in this application.

In this case, the second condition is: The user access requirement corresponding to the first cell is greater than the second threshold.

In this embodiment of this application, the first time value may be a parameter configured together with the second threshold. When a user access requirement of a cell is equal to the second threshold, a scanning periodicity of an SSB beam is equal to the first time value, so that good adaptation between the user access requirement and the scanning periodicity of the SSB beam can be achieved.

604: When the user access requirement of the first cell is less than the second threshold, the access network apparatus configures the scanning periodicity of the first SSB beam as the second parameter, where the second parameter is greater than the first time value.

In this case, the second condition is: The user access requirement corresponding to the first cell is less than the second threshold.

In this embodiment of this application, the user access requirement corresponding to the first cell is compared with the second threshold, so that an appropriate scanning periodicity can be configured for the first SSB beam of the first cell, thereby improving accuracy of configuring the first SSB beam.

605: The access network apparatus compares the user access requirement of the first cell with the user access requirement of the second cell; and if the user access requirement of the first cell is higher than the user access requirement of the second cell, perform step 606; or if the user access requirement of the first cell is lower than the user access requirement of the second cell, perform step 607.

606: When the user access requirement of the first cell is higher than the user access requirement of the second cell, the access network apparatus configures the scanning periodicity of the first SSB beam as the second parameter, where the second parameter is less than the scanning periodicity of the second SSB beam.

607: When the user access requirement of the first cell is lower than the user access requirement of the second cell, the access network apparatus configures the scanning periodicity of the first SSB beam as the second parameter, where the second parameter is greater than the scanning periodicity of the second SSB beam.

In this embodiment of this application, for the first cell, the scanning periodicity of the first SSB beam may be configured with reference to the second cell. The user access requirement of the first cell is compared with that of the second cell, so that an appropriate scanning periodicity of the first SSB beam can be configured for the first cell. In this way, accuracy of configuring the scanning periodicity of the first SSB beam can be improved.

In this embodiment of this application, the configuration of the scanning periodicity is related to the width of the beam, or the configuration of the scanning periodicity is related to the quantity of radio frequency channels used for generating the SSB beams. The following separately provides descriptions.

### 1. Configuration of the scanning periodicity and width of the beam

1.1: The user access requirement is compared with the second threshold.

When the user access requirement corresponding to the first cell is greater than the second threshold, the width of the first SSB beam is greater than a second width value, and the second width value is a beam width value corresponding to the second threshold.

When the user access requirement corresponding to the first cell is less than the second threshold, the width of the first SSB beam is less than the second width value.

In this embodiment of this application, the second threshold, the first time value, and the second width value may be a group of pre-configured parameters. When a user access requirement of a cell is equal to the second threshold, a scanning periodicity of an SSB beam is the first time value, and a width value of the SSB beam is equal to the second width value, so that good adaptation between the user access requirement, the scanning periodicity, and the width value of the SSB beam can be achieved. The user access requirement of the first cell is compared with the second threshold, to determine to use a value greater than the second width value or a value less than the second width value as the width of the first SSB beam. In this way, an appropriate width can be configured for the first SSB beam of the first cell, thereby improving accuracy of configuring the width.

1.2: The user access requirement of the first cell is compared with the user access requirement of the second cell.

When the user access requirement corresponding to the first cell is higher than the user access requirement of the second cell, the width of the first SSB beam is greater than a width value of the second SSB beam.

When the user access requirement corresponding to the first cell is lower than the user access requirement of the second cell, the width of the first SSB beam is less than the width value of the second SSB beam.

In this embodiment of this application, for the first cell, the width of the first SSB beam may be configured with reference to the second cell. The user access requirement of the first cell is compared with that of the second cell, so that an appropriate width of the first SSB beam can be configured for the first cell. In this way, accuracy of configuring the width of the first SSB beam can be improved.

For a relationship between the user access requirement, a length of the scanning periodicity, and the width of the SSB beam, refer to FIG. 7 for understanding. As shown in FIG. 7, a user access requirement of a cell 1 is high, and a scanning periodicity of an SSB beam of the cell 1 is short. In this case, a wide beam may be configured for the cell 1. A user access requirement of a cell 2 is low, and a scanning periodicity of an SSB beam of the cell 2 is long. In this case, a narrow beam may be configured for the cell 2. In this way, for the cell 1 with the high user access requirement, the wide beam can improve a coverage range, and quick scanning of the cell 1 can be implemented by using the wide beam, so that a terminal device can quickly access the access network apparatus. For the cell 2 with the low user access requirement, a small quantity of terminal devices need to access the access network apparatus, and only narrow beam scanning needs to be used to basically meet an access requirement of this part of terminal devices. In addition, an SNR for data transmission in the cell with the low user access requirement can also be increased by using the narrow beam.

2. The configuration of the scanning periodicity is related to the quantity of radio frequency channels used for generating the SSB beams.

In addition, in this embodiment of this application, when the user access requirement corresponding to the first cell is greater than the second threshold, a quantity of radio frequency channels corresponding to the first cell is greater than a first value, the first value is a quantity of radio frequency channels corresponding to the second threshold, and the radio frequency channel of the first cell is used for generating the first SSB beam.

Alternatively, when the user access requirement corresponding to the first cell is higher than the user access requirement of the second cell, a quantity of radio frequency channels corresponding to the first cell is greater than a quantity of radio frequency channels of the second cell, the radio frequency channel of the first cell is used for generating the first SSB beam, and the radio frequency channel of the second cell is used for generating the second SSB beam.

In this embodiment of this application, for the first cell, the quantity of radio frequency channels corresponding to the first cell may be configured with reference to the second cell. The user access requirement of the first cell is compared with that of the second cell, so that an appropriate quantity of radio frequency channels can be configured for the first cell. In this way, accuracy of configuring the quantity of radio frequency channels of the first cell can be improved.

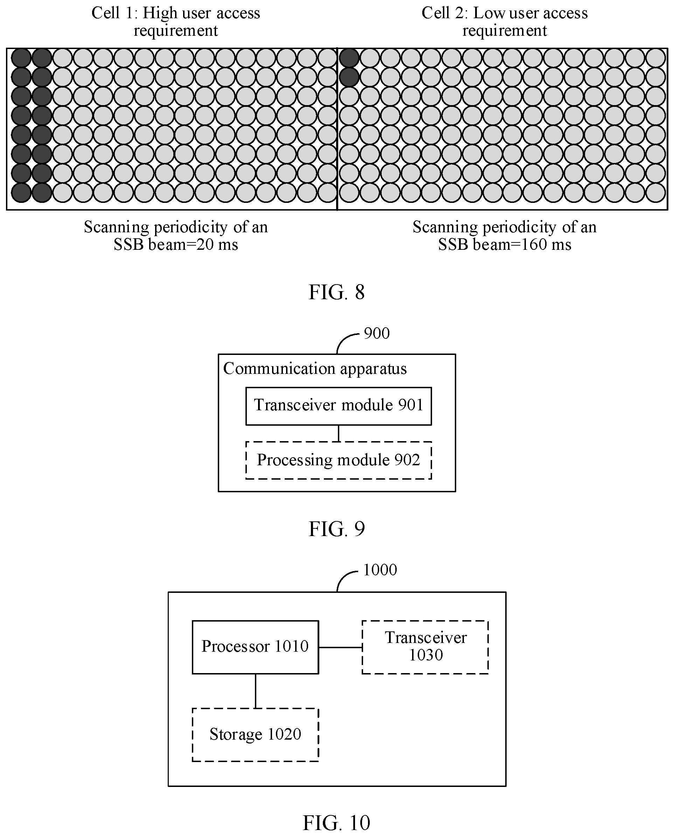

For a relationship between the user access requirement of the cell, the quantity of radio frequency channels used for generating the SSB beams, and the scanning periodicity of the SSB beam, refer to an example in FIG. 8 for understanding.

As shown in FIG. 8, the coverage area of the access network apparatus is divided into a cell 1 and a cell 2 based on user access requirements. The cell 1 corresponds to 16 radio frequency channels, and the cell 2 corresponds to 16 radio frequency channels. A user access requirement of the cell 1 is high, and a user access requirement of the cell 2 is low. For example, a ratio of the user access requirement of the cell 1 to the user access requirement of the cell 2 is 8:1. In this case, during configuration of scanning periodicities of SSB beams for the cell 1 and the cell 2, a scanning periodicity of 20 ms may be configured for the cell 1, and a scanning periodicity of 160 ms may be configured for the cell 2. The cell 1 may simultaneously use the 16 radio frequency channels to generate the SSB beams, to perform scanning in the scanning periodicity of 20 ms. The cell 2 may simultaneously use two radio frequency channels to generate the SSB beams, to perform scanning in the scanning periodicity of 160 ms; and the other 14 radio frequency channels are used for data transmission, and not used for SSB beam scanning. It can be learned that, in this application, the scanning periodicity of the SSB beam and the quantity of radio frequency channels used for generating the SSB beams are configured in a differentiated manner based on the user access requirement corresponding to each cell, so that utilization of the radio frequency channel can be improved.

It should be noted that, for the first cell and the second cell in embodiments corresponding to FIG. 6, FIG. 7, and FIG. 8, areas of the cell 1 and the cell 2 may be the same or different.

The foregoing describes the communication method and the communication system provided in embodiments of this application. The following describes communication apparatuses provided in embodiments of this application. FIG. 9 is a diagram of a structure of a communication apparatus according to an embodiment of this application. The communication apparatus 900 may be configured to perform the steps performed by the access network apparatus in embodiments shown in FIG. 2 to FIG. 8. For details, refer to related descriptions in the foregoing method embodiments.

The communication apparatus 900 includes a transceiver module 901 and a processing module 902. The transceiver module 901 may implement a corresponding communication function, and the processing module 902 is configured to process data. The transceiver module 901 may also be referred to as a communication interface or a communication unit.

Optionally, the communication apparatus 900 may further include a storage unit. The storage unit may be configured to store instructions and/or data. The processing module 902 may read the instructions and/or the data in the storage unit, to cause the communication apparatus to implement the foregoing method embodiments.

The communication apparatus 900 may be configured to perform the actions performed by the access network apparatus in the foregoing method embodiments. The communication apparatus 900 may be a component of the access network apparatus, a host, or a component that can be configured with the host. The transceiver module 901 is configured to perform the receiving-related operation on the access network apparatus side in the foregoing method embodiments, and the processing module 902 is configured to perform the processing-related operation on the access network apparatus side in the foregoing method embodiments.

Optionally, the transceiver module 901 may include a sending module and a receiving module. The sending module is configured to perform the sending operation in the foregoing method embodiments. The receiving module is configured to perform the receiving operation in the foregoing method embodiments.

In an example, the communication apparatus 900 is configured to perform the actions performed by the access network apparatus in the embodiment shown in FIG. 2.

The processing module 902 is configured to determine at least two cells in a coverage area, where the at least two cells include a first cell and a second cell, the first cell and the second cell respectively correspond to different user access requirements or different areas, and the user access requirement is a quantity of access users in a unit time.

The processing module 902 is further configured to determine, based on the user access requirements or the areas respectively corresponding to the first cell and the second cell, a first synchronization signal block SSB beam used for scanning the first cell and a second SSB beam used for scanning the second cell, where a configuration parameter of the first SSB beam is different from a configuration parameter of the second SSB beam, the first SSB beam is a beam used for carrying an SSB corresponding to the first cell, and the second SSB beam is a beam used for carrying an SSB corresponding to the second cell.

In an example, the transceiver module 901 is configured to receive historical access quantities at different positions in the coverage area from a control center apparatus.

The processing module 902 is specifically configured to determine the at least two cells in the coverage area based on the historical access quantities at the different positions in the coverage area.

In an example, the communication apparatus 900 is configured to perform the actions performed by the access network apparatus in the embodiment shown in FIG. 5. The processing module 902 is configured to perform step 501 to step 507 in the embodiment shown in FIG. 5.

In an example, the communication apparatus 900 is configured to perform the actions performed by the access network apparatus in the embodiment shown in FIG. 6. The processing module 902 is configured to perform step 601 to step 607 in the embodiment shown in FIG. 6.

It should be understood that a specific process in which the modules perform the foregoing corresponding steps has been described in detail in the foregoing method embodiments. For brevity, details are not described herein again.

The processing module 902 in the foregoing embodiment may be implemented by at least one processor or a processor-related circuit. The transceiver module 901 may be implemented by a transceiver or a transceiver-related circuit. The transceiver module 901 may also be referred to as a communication unit or a communication interface. The storage unit may be implemented by at least one storage.

As shown in FIG. 10, an embodiment of this application further provides a communication apparatus 1000. The communication apparatus 1000 includes a processor 1010. The processor 1010 is coupled to a storage 1020. The storage 1020 is configured to store a computer program or instructions and/or data. The processor 1010 is configured to execute the computer program or the instructions and/or the data stored in the storage 1020, to cause the method in the foregoing method embodiments to be performed.

Optionally, the communication apparatus 1000 includes one or more processors 1010.

Optionally, as shown in FIG. 10, the communication apparatus 1000 may further include the storage 1020.

Optionally, the communication apparatus 1000 may include one or more storages 1020.

Optionally, the storage 1020 and the processor 1010 may be integrated together or separately disposed.

Optionally, as shown in FIG. 10, the communication apparatus 1000 may further include a transceiver 1030. The transceiver 1030 is configured to receive and/or send a signal. For example, the processor 1010 is configured to control the transceiver 1030 to receive and/or send the signal.

In a solution, the communication apparatus 1000 is configured to implement the operations performed by the access network apparatus in the foregoing method embodiments.

For example, the processor 1010 is configured to implement the processing-related operation performed by the access network apparatus in the foregoing method embodiments, and the transceiver 1030 is configured to implement the operations related to receiving and sending performed by the access network apparatus in the foregoing method embodiments.

An embodiment of this application further provides a communication apparatus 1100. The communication apparatus 1100 may be an access network apparatus or a chip. The communication apparatus 1100 may be configured to perform the operations performed by the access network apparatus in the foregoing method embodiments.

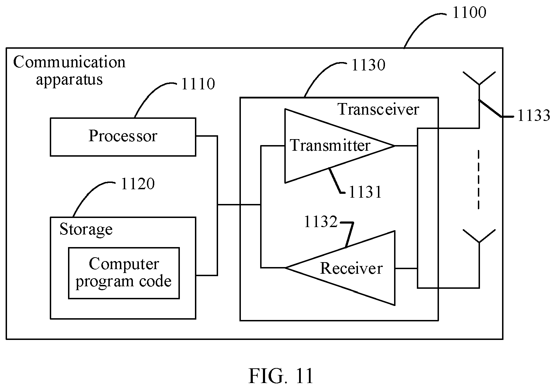

When the communication apparatus 1100 is the access network apparatus, FIG. 11 is a simplified diagram of a structure of the access network apparatus. As shown in FIG. 11, the access network apparatus includes a processor, a storage, and a transceiver. The storage may store computer program code. The transceiver includes a transmitter 1131, a receiver 1132, a radio frequency circuit (not shown in the figure), an antenna 1133, and an input/output apparatus (not shown in the figure). The processor is mainly configured to process a communication protocol and communication data, and control the access network apparatus, to execute a software program, process data of the software program, and the like. The storage is mainly configured to store the software program and the data. The radio frequency circuit is mainly configured to perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to receive data input by a user and output data to the user. It should be noted that some types of access network apparatuses may not have the input/output apparatus.

When data needs to be sent, after performing baseband processing on the to-be-sent data, the processor outputs a baseband signal to the radio frequency circuit; and the radio frequency circuit performs radio frequency processing on the baseband signal and then sends a radio frequency signal to the outside in a form of an electromagnetic wave via the antenna. When the data is sent to the access network apparatus, the radio frequency circuit receives the radio frequency signal via the antenna, converts the radio frequency signal into a baseband signal, and outputs the baseband signal to the processor. The processor converts the baseband signal into data, and processes the data. For ease of description, FIG. 11 shows only one storage, one processor, and one transceiver. In an actual access network apparatus product, there may be one or more processors and one or more storages. The storage may also be referred to as a storage medium, a storage device, or the like. The storage may be disposed independent of the processor, or may be integrated with the processor. This is not limited in embodiments of this application.

In this embodiment of this application, the antenna and the radio frequency circuit that have receiving and sending functions may be considered as a transceiver unit of the access network apparatus, and the processor having a processing function may be considered as a processing unit of the access network apparatus.

As shown in FIG. 11, the access network apparatus includes a processor 1110, a storage 1120, and a transceiver 1130. The processor 1110 may also be referred to as a processing unit, a processing board, a processing module, a processing apparatus, or the like. The transceiver 1130 may also be referred to as a transceiver unit, a transceiver machine, a transceiver apparatus, or the like.

Optionally, a component that is in the transceiver 1130 and that is configured to implement a receiving function may be considered as a receiving unit, and a component that is in the transceiver 1130 and that is configured to implement a sending function may be considered as a sending unit. In other words, the transceiver 1130 includes a receiver device and a transmitter device. The transceiver sometimes may also be referred to as a transceiver machine, a transceiver unit, a transceiver circuit, or the like. The receiver device sometimes may also be referred to as a receiver, a receiving unit, a receiving circuit, or the like. The transmitter device sometimes may also be referred to as a transmitter, a transmitting unit, a transmitting circuit, or the like.

For example, in an implementation, the processor 1110 is configured to perform the processing actions on the access network apparatus side in the embodiment shown in FIG. 2, and the transceiver 1130 is configured to perform the receiving and sending actions on the access network apparatus side in FIG. 2. For example, the processor 1110 is configured to perform the processing operations in step 201 and step 202 in the embodiment shown in FIG. 2.

For example, in an implementation, the processor 1110 is configured to perform the processing actions on the access network apparatus side in the embodiment shown in FIG. 5. The processor 1110 is configured to perform the processing operations in step 501 to step 507 in the embodiment shown in FIG. 5.

For example, in an implementation, the processor 1110 is configured to perform the processing actions on the access network apparatus side in the embodiment shown in FIG. 6. The processor 1110 is configured to perform the processing operations in step 601 to step 607 in the embodiment shown in FIG. 6.

It should be understood that FIG. 11 is merely an example rather than a limitation. The access network apparatus including the transceiver unit and the processing unit may not depend on the structure shown in FIG. 11.

When the communication apparatus 1100 is the chip, the chip includes a processor, a storage, and a transceiver. The transceiver may be an input/output circuit or a communication interface, and the processor may be a processing unit, a microprocessor, or an integrated circuit integrated on the chip. The sending operation performed by the access network apparatus in the foregoing method embodiments may be understood as an output of the chip, and the receiving operation performed by the access network apparatus in the foregoing method embodiments may be understood as an input of the chip.

An embodiment of this application further provides a computer-readable storage medium. The computer-readable storage medium stores computer instructions for implementing the method performed by the access network apparatus in the foregoing method embodiments.

For example, when a computer program is executed by a computer, the computer is caused to implement the method performed by the access network apparatus in the foregoing method embodiments.

An embodiment of this application further provides a computer program product including instructions. When the instructions are executed by a computer, the computer is caused to implement the method performed by the access network apparatus in the foregoing method embodiments.

An embodiment of this application further provides a chip apparatus, including a processor that is configured to invoke a computer program or computer instructions stored in a storage, to cause the processor to perform the communication method in the embodiments shown in FIG. 2 to FIG. 8.

In a possible implementation, an input of the chip apparatus corresponds to the receiving operation in the embodiments shown in FIG. 2 to FIG. 8, and an output of the chip apparatus corresponds to the sending operation in the embodiments shown in FIG. 2 to FIG. 8.

Optionally, the processor is coupled to the storage through an interface.

Optionally, the chip apparatus further includes the storage, and the storage stores the computer program or the computer instructions.

The processor mentioned in any one of the foregoing descriptions may be a general-purpose central processing unit, a microprocessor, an application-specific integrated circuit (application-specific integrated circuit, ASIC), or one or more integrated circuits configured to control program execution of the communication method in the embodiments shown in FIG. 2 to FIG. 8. The storage mentioned in any one of the foregoing descriptions may be a read-only memory (read-only memory, ROM), another type of static storage device that can store static information and instructions, a random access memory (random access memory, RAM), or the like.

It may be clearly understood by a person skilled in the art that for convenient and brief description, for explanations and beneficial effects of related content in any one of the communication apparatuses provided above, refer to the corresponding method embodiments provided above. Details are not described herein again.

In embodiments of this application, the access network apparatus may include a hardware layer, an operating system layer running above the hardware layer, and an application layer running above the operating system layer. The hardware layer may include hardware, for example, a central processing unit (central processing unit, CPU), a memory management unit (memory management unit, MMU), and a memory (also referred to as a main memory). An operating system at the operating system layer may be any one or more computer operating systems, such as a Linux operating system, a Unix operating system, an Android operating system, an iOS operating system, or a Windows operating system, that implement service processing by using a process (process). The application layer may include applications such as a browser, an address book, word processing software, and instant messaging software.

It may be clearly understood by a person skilled in the art that for convenient and brief description, for a specific working process of the system, apparatus, and units that are described above, refer to a corresponding process in the foregoing method embodiments. Details are not described herein again.

In the several embodiments provided in this application, it should be understood that the disclosed system, apparatus, and method may be implemented in other manners. For example, the apparatus embodiments described above are merely examples. For example, division of the units is merely logical function division. During an actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

Units described as separate components may or may not be physically separate, and components displayed as units may or may not be physical units, to be specific, may be located at one position, or may be distributed on a plurality of network units. A part or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions in this application essentially, the part contributing, or all or a part of the technical solutions may be implemented in a form of a software product. The computer software product is stored in a storage medium, and includes several instructions for instructing a computer device (which may be a personal computer, a server, a network device, or the like) to perform all or a part of steps of the method described in embodiments of this application. The foregoing storage medium includes any medium that can store program code, for example, a USB flash drive, a removable hard disk, a read-only memory, a random access memory, a magnetic disk, or an optical disc.

## Claims

1. A communication method, comprising:
determining, by an access network apparatus, at least two cells in a coverage area, wherein the at least two cells comprise a first cell and a second cell, the first cell and the second cell respectively correspond to different user access requirements or different areas, and the user access requirement is a quantity of access users in a unit time; and
determining, by the access network apparatus based on the user access requirements or the areas respectively corresponding to the first cell and the second cell, a first synchronization signal block SSB beam used for scanning the first cell and a second SSB beam used for scanning the second cell, wherein a configuration parameter of the first SSB beam is different from a configuration parameter of the second SSB beam, the first SSB beam is a beam used for carrying an SSB corresponding to the first cell, and the second SSB beam is a beam used for carrying an SSB corresponding to the second cell.

2. The method according to claim 1, wherein the configuration parameter of the first SSB beam comprises a width of the first SSB beam and a scanning periodicity of the first SSB beam, and the configuration parameter of the second SSB beam comprises a width of the second SSB beam and a scanning periodicity of the second SSB beam; and
a difference between the configuration parameter of the first SSB beam and the configuration parameter of the second SSB beam lies in at least one of the following: the width of the first SSB beam is different from the width of the second SSB beam, and the scanning periodicity of the first SSB beam is different from the scanning periodicity of the second SSB beam.

3. The method according to claim 2, wherein when the area of the first cell meets a first condition, the width of the first SSB beam is configured as a first parameter.

4. The method according to claim 3, wherein the first condition is: the area of the first cell is greater than a first threshold, or the area of the first cell is less than the first threshold; and
when the area of the first cell is greater than the first threshold, the first parameter is greater than a first width value, and the first width value is a beam width value corresponding to the first threshold; or
when the area of the first cell is less than the first threshold, the first parameter is less than the first width value.

5. The method according to claim 3, wherein the first condition is: the area of the first cell is larger than the area of the second cell, or the area of the first cell is smaller than the area of the second cell; and
when the area of the first cell is larger than the area of the second cell, the first parameter is greater than a width value of the second SSB beam; or
when the area of the first cell is smaller than the area of the second cell, the first parameter is less than the width value of the second SSB beam.

6. The method according to claim 2, wherein when the user access requirement corresponding to the first cell meets a second condition, the scanning periodicity of the first SSB beam is configured as a second parameter.

7. The method according to claim 6, wherein the second condition is: the user access requirement corresponding to the first cell is greater than a second threshold, or the user access requirement corresponding to the first cell is less than the second threshold; and
when the user access requirement corresponding to the first cell is greater than the second threshold, the second parameter is less than a first time value, and the first time value is a scanning periodicity corresponding to the second threshold; or
when the user access requirement corresponding to the first cell is less than the second threshold, the second parameter is greater than the first time value.

8. The method according to claim 6, wherein the second condition is: the user access requirement corresponding to the first cell is higher than the user access requirement of the second cell, or the user access requirement corresponding to the first cell is lower than the user access requirement of the second cell; and
when the user access requirement corresponding to the first cell is higher than the user access requirement of the second cell, the second parameter is less than the scanning periodicity of the second SSB beam; or
when the user access requirement corresponding to the first cell is lower than the user access requirement of the second cell, the second parameter is greater than the scanning periodicity of the second SSB beam.

9. The method according to claim 7, wherein
when the user access requirement corresponding to the first cell is greater than the second threshold, the width of the first SSB beam is greater than a second width value, and the second width value is a beam width value corresponding to the second threshold; or
when the user access requirement corresponding to the first cell is less than the second threshold, the width of the first SSB beam is less than the second width value.

10. The method according to claim 8, wherein
when the user access requirement corresponding to the first cell is higher than the user access requirement of the second cell, the width of the first SSB beam is greater than a width value of the second SSB beam; or
when the user access requirement corresponding to the first cell is lower than the user access requirement of the second cell, the width of the first SSB beam is less than the width value of the second SSB beam.

11. The method according to claim 7, wherein when the user access requirement corresponding to the first cell is greater than the second threshold, a quantity of radio frequency channels corresponding to the first cell is greater than a first value, the first value is a quantity of radio frequency channels corresponding to the second threshold, and the radio frequency channel of the first cell is used for generating the first SSB beam.

12. The method according to claim 8, wherein when the user access requirement corresponding to the first cell is higher than the user access requirement of the second cell, a quantity of radio frequency channels corresponding to the first cell is greater than a quantity of radio frequency channels of the second cell, the radio frequency channel of the first cell is used for generating the first SSB beam, and the radio frequency channel of the second cell is used for generating the second SSB beam.

13. The method according to any one of claims 1 to 12, wherein determining, by the access network apparatus, the at least two cells in the coverage area comprises:
determining, by the access network apparatus, the at least two cells in the coverage area based on stored historical access quantities at different positions in the coverage area.

14. The method according to any one of claims 1 to 12, wherein the method further comprises:
receiving historical access quantities at different positions in the coverage area from a control center apparatus; and
determining, by the access network apparatus, the at least two cells in the coverage area comprises:
determining, by the access network apparatus, the at least two cells in the coverage area based on the historical access quantities at the different positions in the coverage area.

15. A communication apparatus, comprising a transceiver module and a processing module, wherein
the transceiver module is configured to perform receiving and sending operations in the method according to any one of claims 1 to 14, and the processing module is configured to perform a processing operation in the method according to any one of claims 1 to 14.

16. A communication apparatus, wherein the communication apparatus comprises:
a storage, configured to store computer instructions; and
a processor, configured to execute a computer program or the computer instructions stored in the storage, to cause the communication apparatus to perform the method according to any one of claims 1 to 14.

17. A computer-readable storage medium, wherein the computer-readable storage medium stores a computer program; and when the computer program is executed by a communication apparatus, the communication apparatus is caused to perform the method according to any one of claims 1 to 14.

18. A communication system, comprising an access network apparatus and a terminal device, wherein the access network apparatus communicates with the terminal device, and the access network apparatus is configured to perform the method according to any one of claims 1 to 14.

19. A computer program product comprising instructions, wherein when the computer program product runs on a computer, the computer is caused to perform the method according to any one of claims 1 to 14.
